# EUROPEAN PATENT SPECIFICATION

(11) **EP 3 236 109 B1**
(45) Date of publication and mention of the grant of the patent: **05.06.2019**
(21) Application number: 16166438.8
(22) Date of filing: 21.04.2016
(51) Int. Cl.: F16H 57/00, F16H 3/089

(54) **GEAR CHANGE DEVICE FOR A MOTOR VEHICLE AND METHOD FOR MANUFACTURE THEREOF**
GANGSCHALTUNGSVORRICHTUNG FÜR EIN KRAFTFAHRZEUG UND VERFAHREN ZUR HERSTELLUNG DAVON
DISPOSITIF DE CHANGEMENT DE VITESSES POUR UN VÉHICULE AUTOMOBILE ET SON PROCÉDÉ DE FABRICATION

(43) Date of publication of application: 25.10.2017
(73) Proprietor: FCA Italy S.p.A., 10135 Torino (IT)
(72) Inventor: CONSANI, Marco, 10135 Torino (IT); DI MARTINO, Alessandro, 81043 Capua (Caserta) (IT)
(74) Representative: Notaro, Giancarlo

(56) References cited:
- EP-A1- 0 710 786
- DE-A1- 4 041 899

## Description

### Field of the invention

The present invention relates to gear change devices for motor vehicles of the type including:
- a gear change casing;
- at least one primary shaft, which is to be connected to the engine shaft of the motor vehicle;
- at least one secondary shaft, having an axis parallel to and spaced apart from of the axis of said primary shaft;
- said primary and secondary shafts being rotatably supported within said gear change casing each by means of at least two rolling bearings axially spaced apart from each other;
- a plurality of gear pairs corresponding to a plurality of forward-gear ratios, in which for each gear pair one gear is rigidly connected in rotation to one between said primary shaft and said secondary shaft and the other is free to rotate with respect to the other between said primary shaft and said secondary shaft;
- a plurality of gear-engagement devices for coupling in rotation each of said freely rotating gears with the shaft on which it is mounted,
- wherein said primary and secondary shafts have end portions, on a side which is to be opposite with respect to the engine, which extend beyond respective rolling bearings and carry a pair of said gears.

### Prior art

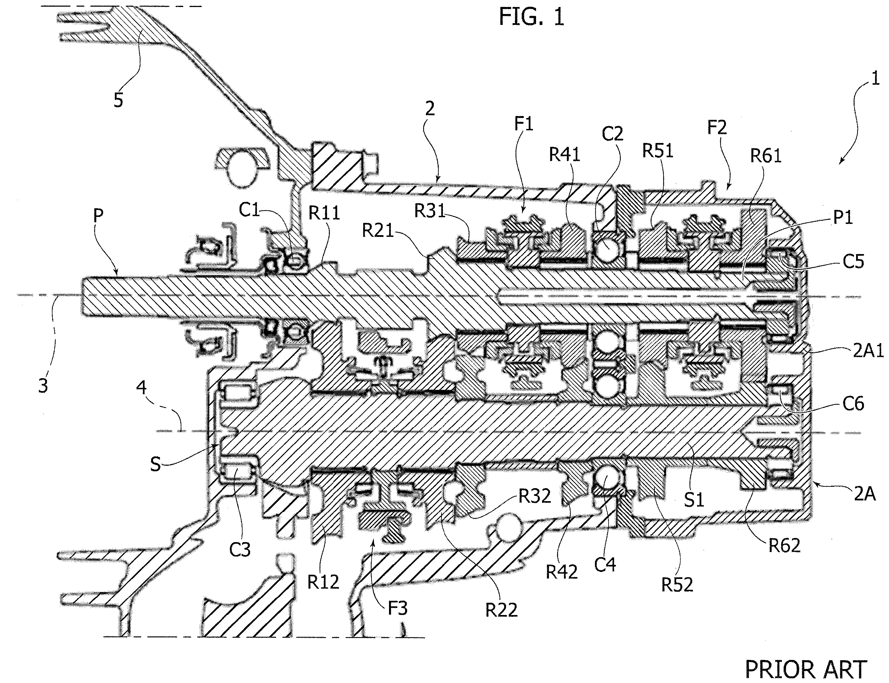

Figure 1 is a schematic cross-sectional view of a gear change device 1, with six gears, of the conventional type referred to above.

The gear change device 1 comprises a gear change casing 2, for example made of aluminium, which supports a primary shaft P and a secondary shaft S in rotation about respective axes 3 and 4. The primary shaft P is rotatably mounted within the gear change casing 2 by means of a first rolling bearing C1 on the side facing the engine (not illustrated) and a second rolling bearing C2 located at the opposite end of the gear change casing 2. The secondary shaft S is rotatably supported by the gear change casing 2 by means of a rolling bearing C3 at the end of the gear change casing 2 facing the engine and by means of a bearing C4 at the opposite end of the gear change casing. Figure 1 also partially shows the bell 5 of the clutch used for connecting the primary shaft P to the engine shaft (not illustrated). The primary shaft P and the secondary shaft S have, on the side opposite to the engine, end portions P1 and S1 that extend beyond the bearings C2 and C4, within a portion 2A of gear change casing rigidly connected to the main body of the gear change casing 2. The portion 2A of gear change casing supports directly in rotation the aforesaid end portions P1, S1 of the primary and secondary shafts P, S by means of respective rolling bearings C5, C6.

Figure 1 shows an example of a conventional gear change with six gears in which the primary and secondary shafts P, S carry the same number of gear pairs R11, R12; R21, R22; R31, R32; R41, R42; R51, R52; and R61, R62, which mesh with one another. According to a conventional technique, for each gear pair, one gear is rigidly connected to the respective shaft, whereas the other gear is mounted free to rotate on the respective shaft. In the specific case, the gears R11, R21 are rigidly connected to the primary shaft P and mesh with gears R12, R22 that are mounted freely rotating on the secondary shaft S. The gears R32, R42, R52, R62 are all rigidly connected to the secondary shaft S and mesh with gears R31, R41, R51, R61 mounted freely rotating on the primary shaft P.

Associated to the primary shaft P are two engagement devices F1, F2, whereas associated to the secondary shaft S is one engagement device F3. Each of these engagement devices includes a sleeve, which is to be driven by a respective fork (not visible in the drawing) controlled by a gear change control device. Each engagement device can be displaced axially starting from a neutral central position in one direction or in the other for connecting a respective gear in rotation to the shaft on which it is mounted. More specifically, the engagement device F1 has two opposite operative positions in which it can be displaced selectively for connecting the gear R31 or the gear R41 in rotation to the primary shaft P. The engagement device F2 is designed to connect the gear R51 or the gear R61 in rotation to the primary shaft P. The engagement device F3 is designed to connect the gear R12 or the gear R22, respectively, in rotation to the secondary shaft S. In each gear condition, just one of the engagement devices F1, F2, F3 is located in an active position thereof, in such a way that a transmission ratio is implemented corresponding to the gear pair thus selected.

In the solution illustrated in Figure 1, the two gear pairs R51, R52 and R61, R62 are carried by two end portions P1 and S1 of the primary and secondary shafts P, S that project beyond the rolling bearings C2, C4. The end portion P1 of the primary shaft P also carries the engagement device F2. The end portions P1, S1 extend within the portion 2A of the gear change casing 2, which is screwed to the end of the main body of the gear change casing 2 on the side opposite to the engine. The portion 2A of the gear change casing has an end wall 2A1, mounted within which are the rolling bearings C5, C6 that support in rotation the terminal parts of the end portions P1, S1.

Once again with reference to the known solution, in a normal production that envisages two versions of one and the same gear change, one with six gears, as illustrated in Figure 1, and the other with five gears, it is necessary to provide two different shaft lengths, both for the primary shaft P and for the secondary shaft S.

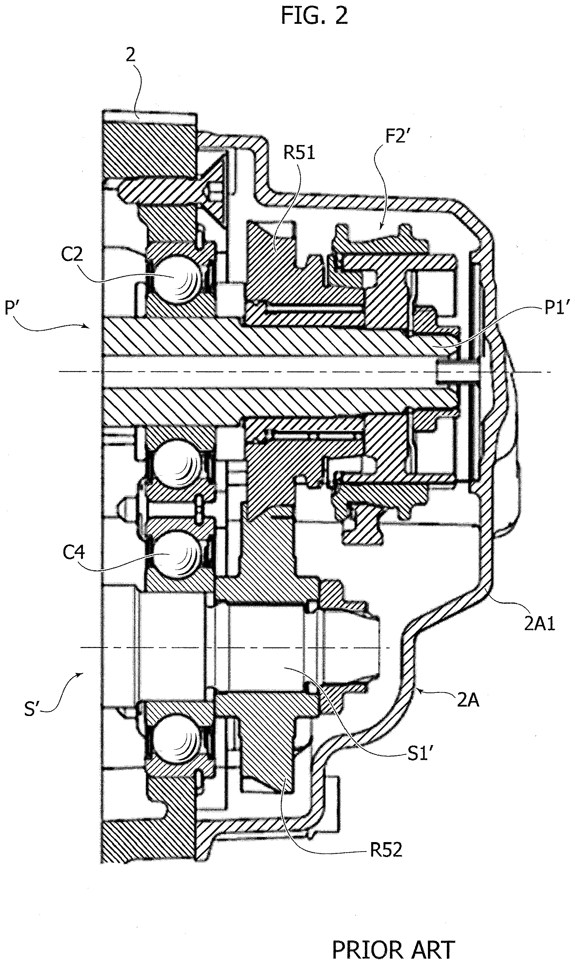

Figure 2 shows the end portion of the gear change in the five-gear version. As may be seen, in this case, instead of the primary and secondary shafts P, S, which are illustrated in Figure 1, it is necessary to provide two different shafts P', S' of smaller length, which have end portions P1' and S1' that project beyond the bearings C2, C4 for a length smaller than the case illustrated in Figure 1. As may be seen in Figure 2, in this case the gear pair R61, R62 is omitted, as likewise omitted are the rolling bearings C5, C6. The engagement device associated to the end portion P1' is moreover a device F2' modified with respect to the engagement device F2 of Figure 1 in so far as has just one active position in which it connects the gear R51 in rotation to the primary shaft P'.

The drawback of the aforesaid prior art is represented by the fact that it implies relatively complex and far from efficient production plants. For instance, a main production line on which the gear change in the five-gear version is assembled, and an additional line dedicated for assembly of the gear change in the six-gear version must be provided. It would, instead, be desirable to render simpler and more rational the production of both of the versions of gear change, or also further versions of gear change that differ from each other in the number of gears.

A gear change device according to the preamble of claim 1 is known from DE 40 41 899 A1.

### Object of the invention

The object of the present invention is to provide a gear change device for motor vehicles having an architecture such as to enable production of different versions of gear change, with different numbers of gears, by means of a simple and efficient production line.

A further object of the invention is to provide a gear change device that is suited to being produced in different versions, and in which each version of gear change has a simple and low-cost structure.

A further object of the invention is to provide a gear change device the parts of which can be assembled in a simple and at the same time precise way so as to ensure proper and reliable operation of the gear change device.

### Summary of the invention

With a view to achieving the aforesaid objects, the subject of the present invention is a gear change device having all the characteristics of claim 1.

The main advantage deriving from the structure and arrangement described above lies in the fact that different versions of the gear change device, characterized by a different number of gears, can be assembled on one and the same production line, in a simple and efficient way. The shaft-extension elements are not mounted when the aim is to obtain a gear change device with n gears, whereas they are mounted when the aim is to obtain a gear change device with at least n+1 gears.

In the invention, in their coupled condition, the first end portion and the first shaft-extension element define together a continuous cylindrical surface, interference-fitted on which is a cylindrical bushing that rotatably supports the third gear via a rolling bearing.

Moreover, in the coupled condition of the second end portion and of the second shaft-extension element, the second gear and the fourth gear have adjacent hubs that together define a cylindrical surface, interference-fitted on which is a cylindrical bushing.

Interference-fit mounting of the cylindrical bushings ensures coaxiality of the shaft-extension elements with the primary and secondary shafts and consequent proper meshing of the gear pairs carried thereby.

### Detailed description of a preferred embodiment

Further characteristics and advantages of the invention will emerge from the ensuing description with reference to the annexed drawings, which are provided purely by way of non-limiting example and in which:
- Figure 1 is a schematic cross-sectional view of a gear change device with six gears, according to the prior art;
- Figure 2 is a schematic cross-sectional view of the end portion of the gear change device of Figure 1, in the five-gear variant;
- Figures 3 and 4 are schematic cross-sectional views in the assembled condition and in an exploded condition, respectively, of the end portion of a gear change device according to the present invention;
- Figure 5 is a schematic cross-sectional view of the portion of gear change illustrated in Figure 3, in the five-gear variant; and
- Figure 6 is a diagram of a production line for manufacturing the gear change device according to the invention.

Figures 1 and 2, which regard the prior art, have already been discussed at the start of the present description.

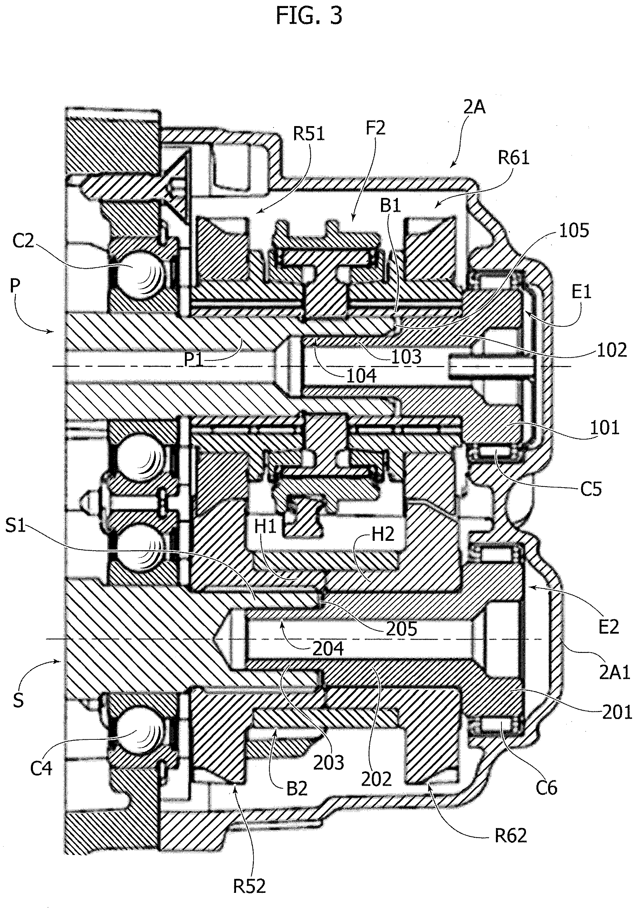

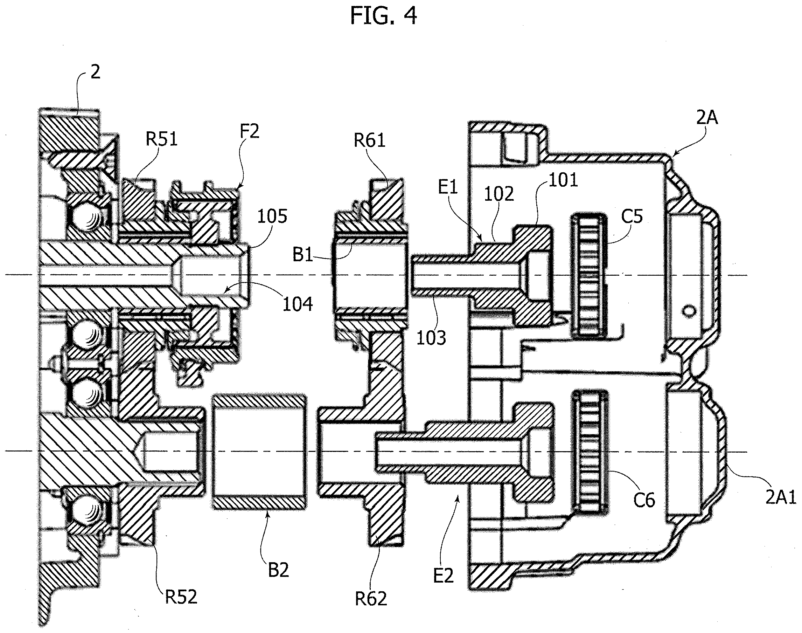

Figures 3 and 4 of the annexed drawings show schematic sections in the assembled condition and in an exploded condition, respectively, of the end portion of the gear change device of Figure 1, modified according to the teachings of the present invention, to provide a gear change device with six gears.

The main characteristic of the gear change device according to the invention lies in the fact that, instead of using primary and secondary shafts of different lengths to obtain gear change devices with different numbers of gears, a modular structure is adopted for each of the aforesaid shafts, which envisages that to the end portion of the primary and secondary shafts, on the side opposite to the engine, a shaft-extension element is coupled in the case where it is desired to obtain the version of gear change with a higher number of gears.

In Figures 3-5, the parts common to those illustrated in Figures 1 and 2 are designated by the same reference numbers.

With reference, in particular, to Figures 3 and 4, the main difference as compared to the known solution of Figure 1 lies in the fact that both the primary shaft P and the secondary shaft S have a composite modular structure, including two shaft-extension elements E1 and E2 that are coupled to the end portions P1, S1 of the primary and secondary shafts P, S.

In the example illustrated, the shaft-extension element E1 has a tubular body, with an end of larger diameter 101, extending from which is an intermediate cylindrical body 102, from which there in turn extends a cylindrical shank 103 of smaller diameter. The cylindrical shank 103 has its outer surface threaded for engagement by screwing within a threaded axial hole 104 formed in the primary shaft P starting from its end surface 105.

Likewise, the shaft-extension element E2 has an end of larger diameter 201, an intermediate cylindrical portion 202, and an end shank 203 of smaller diameter, having its outer surface threaded, for engagement by screwing within a threaded axial hole 204 made starting from the end surface 205 of the secondary shaft S.

The ends 101, 201 of the shaft-extension elements E1, E2 are rotatably supported within the portion 2A of the gear change casing by means of the rolling bearings C5, C6.

As may be seen in Figures 3 and 4, in the condition where the shaft-extension elements E1, E2 are coupled to the end portions P1, S1 of the primary and secondary shafts P, S, the intermediate portions 102, 202 are adjacent to the end portions P1, S1 and, having identical diameter, define therewith continuous cylindrical surfaces.

Mounted on the continuous cylindrical surface defined by the end portion P1 together with the portion 102 of the shaft-extension element E1 is a bushing B1 that supports the gear R61 in rotation by means of a rolling bearing. Mounting is obtained by interference fit. The coupling surfaces between the bushing B1, the end portion P1, and the portion 101 of the shaft-extension element E1 are machined with a precision sufficient to ensure coaxiality of the end portion P1 of the primary shaft P and of the shaft-extension element E1, within a strict tolerance.

Also the intermediate portion 202 of the shaft-extension element E2 and the end portion S1 of the secondary shaft S are adjacent to one another in the coupled condition and, since they have the same diameter, they define a continuous cylindrical surface. However, in this case, the coaxiality between the secondary shaft S and the shaft-extension element E2 is ensured by the interference fit of a cylindrical bushing B2 on adjacent hubs H1, H2 of the two gears R52, R62. The gear R52 is rigidly connected to the end portion S1 of the secondary shaft S, according to the prior art. Moreover, the gear R62 is rigidly connected, by interference fit, on the intermediate portion 202 of the shaft-extension element E2. Also in this case, the bushing B2 is interference-fitted on the hubs H1, H2, and the coupling surfaces are machined with a precision sufficient to ensure that the coaxiality between the end portion S1 of the secondary shaft S and the shaft-extension element E2 is guaranteed within a strict tolerance.

Thanks to the bushings B1, B2, there is ensured proper meshing of the gear pair R61, R62.

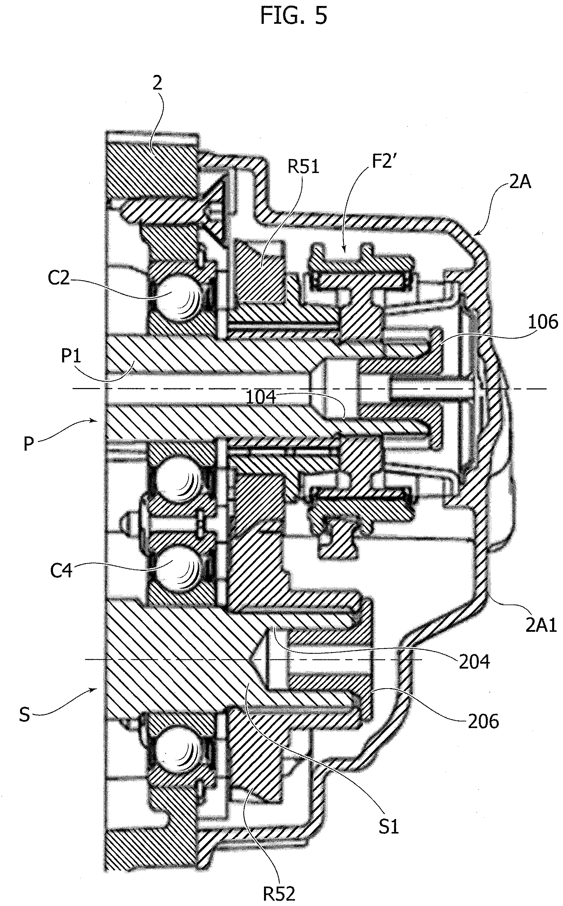

According to the present invention, in the case where the gear change device has to be produced in a five-gear version, the shaft-extension elements E1, E2 are eliminated, as shown in Figure 5, so as not to require provision of two different primary and secondary shafts P, S. In this case, the two rolling bearings C5, C6 are eliminated. The axial holes 104, 204 are covered by two caps 106, 206 screwed within them, having heads resting against the end surfaces of the primary and secondary shafts P, S. The engagement device F1 is replaced by an engagement device F1' having just one operating position, for connecting in rotation the gear R51 to the end portion P1 of the primary shaft P.

As is evident from the foregoing description, the gear change device according to the invention has a structure devised according to criteria of modularity, which enables production of gear changes with different numbers of gears on a single production line, with advantages of simplification of production and higher efficiency.

Of course, even though the example illustrated herein refers to the case of a gear change that is to be produced in a five-gear version or in a six-gear version, the invention applies to gear change devices with any number of gears, and nothing rules out the possibility of the shaft-extension elements envisaged according to the invention being provided with more than one additional gear pair.

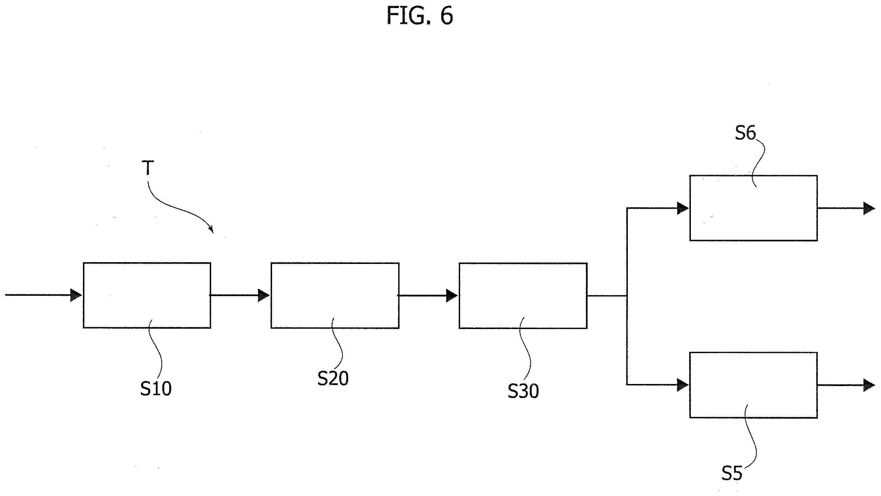

Thanks to the present invention, it is possible to set up a single production line for gear change devices with different numbers of gears, according to what is illustrated schematically in Figure 6. In this figure, the reference T designates a single production line, which includes a succession of assembly stations S10, S20, S30, etc., where successive operations of assembly that are common to the two different versions of gear change device (for example, a six-gear version and a five-gear version) are carried out. In the example illustrated, in the final part the line splits up into two branches and hence proceeds towards a station S6, for assembly for example of the six-gear version, or else towards a station S5, for assembly of the five-gear version. In the station S6, the shaft-extension elements E1, E2 are coupled to the primary and secondary shafts P, S, whereas in the station S5 this operation is not carried out. Along each of the two branches of the line the final operations are carried out necessary to obtain, for example, the six-gear device of Figure 3 or the five-gear device of Figure 5, respectively. However, it would be possible to envisage that the line remains single and includes different workstations for carrying out assembly of different versions of the gear change.

The structure of the gear change device as described above facilitates and simplifies the operations of assembly and at the same time ensures the precision of assembly that is necessary in order to obtain proper and reliable operation of the gear change device.

## Claims

1. A gear change device for a motor vehicle, including:
- a gear change casing (2),
- at least one primary shaft, which is to be connected to the engine shaft of the motor vehicle,
- at least one secondary shaft (S), having an axis (4) parallel to and spaced apart from the axis (3) of said primary shaft (P),
- said primary and secondary shafts (P, S) being rotatably supported within said gear change casing (2) each by means of at least two rolling bearings (C1, C2; C3, C4) axially spaced apart from each other,
- a plurality of gear pairs (R11, R12; R21, R22; R31, R32; R41, R42; R51, R52; R61, R62) corresponding to a plurality of forward-gear ratios, in which for each gear pair one gear is rigidly connected in rotation to one between said primary shaft (P) and said secondary shaft (S) and the other is free to rotate with respect to the other between said primary shaft (P) and said secondary shaft (S); and
- a plurality of gear-engagement devices (F1, F2, F3) for coupling each of said freely rotating gears in rotation to the shaft on which it is mounted,
- wherein said primary and secondary shafts (P, S) have end portions (P1, S1), on a side which is to be opposite with respect to the engine, which extend beyond respective rolling bearings (C2, C4) and carry at least one pair of said gears (R51, R52),
said gear change device being **characterized in that** said end portions (P1, S1) of said primary shaft (P) and of said secondary shaft (S) are coupled to respective shaft-extension elements (E1, E2), which carry a further pair of said gears (R61, R62),
wherein:
- a first one of said end portions (P1) of the primary and secondary shafts (P, S) carries a first gear (R51) mounted free to rotate thereon,
- the second one of said end portions (S1) of the primary and secondary shafts (P, S) carries a second gear (R52) rigidly connected thereto and meshing with the first gear (R51) carried by said first end portion (P1),
- a first one of said shaft-extension elements (E1), which can be coupled to said first end portion (P1) carries a third gear (R61) mounted free to rotate thereon,
- a second one of said shaft-extension elements (E2), which can be coupled to said second end portion (S1), carries a fourth gear (R62) rigidly connected thereto and meshing with said third gear (R61) carried by the first shaft-extension element (E1), and
- said first end portion (P1) also carries a gear-engagement device (F2, F2') for coupling selectively in rotation one between said first gear (R51) and said third gear (R61) with said first end portion (P1),
said gear change device being **characterized in that**:
- in their coupled condition, said first end portion (P1) and said first shaft-extension element (E1) define together a continuous cylindrical surface, on which a cylindrical bushing (B1) is mounted by an interference-fit, so as to ensure coaxiality of the first shaft-extension element (E1) with the primary shaft (P), said bushing (B1) rotatably supporting said third gear (R61) via a rolling bearing, and
- in the coupled condition of said second end portion (S1) and of said second shaft-extension element (E2), said second gear (R52) and said fourth gear (R62) have adjacent hubs (H1, H2) that define together a continuous cylindrical surface, on which a cylindrical bushing (B2) is mounted by an interference-fit, so as to ensure coaxiality of the second shaft-extension element (E2) with the secondary shaft (S).

2. The gear change device according to Claim 1, **characterized in that** said shaft-extension elements (E1, E2) each have an end (101, 201) supported in rotation by the gear change casing (2, 2A) by means of a rolling bearing (C5, C6).

3. The gear change device according to Claims 2, **characterized in that** each of said shaft-extension elements (E1, E2) has an intermediate cylindrical portion (102, 202), from which there extends a threaded shank (103, 203) of smaller diameter, which is screwed into a threaded axial hole (104, 204) formed in each of said primary and secondary shafts (P, S) starting from its end surface.

## Patentansprüche

1. Gangschaltungs-Vorrichtung für ein Kraftfahrzeug, die enthält:
- ein Gangschaltungs-Gehäuse (2),
- wenigstens eine Primär-Welle, die mit der Motorwelle des Kraftfahrzeugs verbunden wird,
- wenigstens eine Sekundär-Welle (S), die eine Achse (4) hat, die parallel zu der Achse (3) der Primär-Welle (P) und von ihr beabstandet ist,
- wobei die Primär- und die Sekundär-Welle (P, S) jeweils über wenigstens zwei Wälzlager (C1, C2; C3, C4), die axial voneinander beabstandet sind, drehbar im Inneren des Gangschaltungs-Gehäuses (2) gelagert sind,
- eine Vielzahl von Räder-Paaren (R11, R12; R21, R22; R31, R32; R41, R42; R51, R52; R61, R62), die einer Vielzahl von Vorwärts-Übersetzungsverhältnissen entsprechen, wobei für jedes Räder-Paar ein Rad starr in Drehung mit der Primär-Welle (P) oder der Sekundär-Welle(S) verbunden ist und das andere sich in Bezug auf die andere von der Primär-Welle (P) und der Sekundär-Welle (S) frei drehen kann; sowie
- eine Vielzahl von Rad-Eingriffseinrichtungen (F1, F2, F3) zum Koppeln jedes der sich frei drehenden Räder in Drehung mit der Welle, an der es installiert ist,
- wobei die Primär- und die Sekundär-Welle (P, S) Endabschnitte (P1, S1) an einer Seite haben, die in Bezug auf den Motor gegenüberliegt, und die sich über jeweilige Wälzlager (C2, C4) hinaus erstrecken und wenigstens ein Paar der Räder (R51, R52) tragen,
und die Gangschaltungs-Vorrichtung **dadurch gekennzeichnet ist, dass** die Endabschnitte (P1, S1) der Primär-Welle (P) und der Sekundär-Welle (S) mit jeweiligen Wellen-Verlängerungselementen (E1, E2) gekoppelt sind, die ein weiteres Paar der Räder (R61, R62) tragen,
wobei:
- ein erster der Endabschnitte (P1) der Primär- und der Sekundär-Welle (P, S) ein erstes Rad (R51) trägt, das frei drehbar daran installiert ist,
- der zweite der Endabschnitte (S1) der Primär- und der Sekundär-Welle (P, S) ein zweites Rad (R52) trägt, das starr damit verbunden ist und mit dem von dem ersten Endabschnitt (P1) getragenen ersten Rad (R51) in Eingriff ist,
- ein erstes der Wellen-Verlängerungselemente (E1), das mit dem ersten Endabschnitt (P1) verbunden werden kann, ein drittes Rad (R61) trägt, das frei drehbar daran installiert ist,
- ein zweites der Wellen-Verlängerungselemente (E2), das mit dem zweiten Endabschnitt (S1) gekoppelt werden kann, ein viertes Rad (R62) trägt, das starr damit verbunden ist und mit dem von dem ersten Wellen-Verlängerungselement (E1) getragenen dritten Rad (R61) in Eingriff ist, und
- der erste Endabschnitt (P1) ebenfalls eine Rad-Eingriffseinrichtung (F2, F2') zum selektiven Koppeln des ersten Rades (R51) oder des dritten Rades (R61) in Drehung mit dem ersten Endabschnitt (P1) trägt,
und die Gangschaltungs-Vorrichtung **dadurch gekennzeichnet ist, dass**:
- in ihrem gekoppelten Zustand der erste Endabschnitt (P1) und das erste Wellen-Verlängerungselement (E1) zusammen eine durchgehende zylindrische Fläche bilden, an der eine zylindrische Buchse (B1) mittels einer Presspassung installiert ist, um so Koaxialität des ersten Wellen-Verlängerungselementes (E1) mit der Primär-Welle (P) zu gewährleisten, wobei die Buchse (B1) das dritte Rad (R61) über ein Wälzlager drehbar trägt, und
- in dem gekoppelten Zustand des zweiten Endabschnitts (S1) und des zweiten Wellen-Verlängerungselementes (E2) das zweite Rad (R52) und das vierte Rad (R62) benachbarte Naben (H1, H2) aufweisen, die zusammen eine durchgehende zylindrische Fläche bilden, an der eine zylindrische Buchse (B2) mittels einer Presspassung installiert ist, um so Koaxialität des zweiten Wellen-Verlängerungselementes (E2) mit der Sekundär-Welle (S) zu gewährleisten.

2. Gangschaltungs-Vorrichtung nach Anspruch 1, **dadurch gekennzeichnet, dass** die Wellen-Verlängerungselemente (E1, E2) jeweils ein Ende (101, 201) haben, das über ein Wälzlager (C5, C6) in Drehung durch das Gangschaltungs-Gehäuse (2, 2A) getragen wird.

3. Gangschaltungs-Vorrichtung nach Anspruch 2, **dadurch gekennzeichnet, dass** jedes der Wellen-Verlängerungselemente (E1, E2) einen zylindrischen Zwischenabschnitt (102, 202) aufweist, von dem sich ein Gewindeschaft (103, 203) mit kleinerem Durchmesser erstreckt, der in ein axiales Gewindeloch (104, 204) eingeschraubt ist, das jeweils in der Primär- und der Sekundär-Welle (P, S) von ihrer Endfläche ausgehend ausgebildet ist.

## Revendications

1. Dispositif de changement de vitesse pour un véhicule automobile, comportant :
- un carter de changement de vitesse (2),
- au moins un arbre primaire, qui doit être relié à l'arbre moteur du véhicule automobile,
- au moins un arbre secondaire (S), ayant un axe (4) parallèle à l'axe (3) dudit arbre primaire (P) et espacé de celui-ci,
- lesdits arbres primaire et secondaire (P, S) étant supportés en rotation à l'intérieur dudit carter de changement de vitesse (2) chacun au moyen d'au moins deux roulements (C1, C2 ; C3, C4) espacés axialement l'un de l'autre,
- une pluralité de paires d'engrenages (R11, R12 ; R21, R22 ; R31, R32 ; R41, R42 ; R51, R52 ; R61, R62) correspondant à une pluralité de rapports de marche avant, où pour chaque paire d'engrenages, un seul engrenage est relié de manière rigide en rotation à l'un entre ledit arbre primaire (P) et ledit arbre secondaire (S) et l'autre peut tourner librement par rapport à l'autre entre ledit arbre primaire (P) et ledit arbre secondaire (S) ; et
- une pluralité de dispositifs d'engagement d'engrenage (F1, F2, F3) pour coupler chacun desdits engrenages tournant librement en rotation à l'arbre sur lequel il est monté,
- dans lequel lesdits arbres primaire et secondaire (P, S) ont des parties d'extrémité (P1, S1), sur un côté qui doit être opposé par rapport au moteur, qui s'étendent au-delà des roulements (C2, C4) respectifs et portent au moins une paire desdits engrenages (R51, R52),
ledit dispositif de changement de vitesse étant **caractérisé en ce que** lesdites parties d'extrémité (P1, S1) dudit arbre primaire (P) et dudit arbre secondaire (S) sont couplées à des éléments de prolongement d'arbre respectifs (E1, E2), qui portent une autre paire desdits engrenages (R61, R62),
où :
- une première partie desdites parties d'extrémité (P1) des arbres primaire et secondaire (P, S) porte un premier engrenage (R51) monté libre en rotation sur celle-ci,
- la deuxième partie desdites parties d'extrémité (S1) des arbres primaire et secondaire (P, S) porte un deuxième engrenage (R52) relié rigidement à celle-ci et s'engrenant avec le premier engrenage (R51) porté par ladite première partie d'extrémité (P1),
- un premier élément desdits éléments de prolongement d'arbre (E1), qui peut être couplé à ladite première partie d'extrémité (P1) porte un troisième engrenage (R61) monté libre en rotation sur celui-ci,
- un deuxième élément desdits éléments de prolongement d'arbre (E2), qui peut être couplé à ladite deuxième partie d'extrémité (S1), porte un quatrième engrenage (R62) relié rigidement à celui-ci et s'engrenant avec ledit troisième engrenage (R61) porté par le premier élément de prolongement d'arbre (E1), et
- ladite première partie d'extrémité (P1) porte également un dispositif d'engagement d'engrenage (F2, F2') pour coupler sélectivement en rotation l'un entre ledit premier engrenage (R51) et ledit troisième engrenage (R61) à ladite première partie d'extrémité (P1),
ledit dispositif de changement de vitesse étant **caractérisé en ce que** :
- dans leur état couplé, ladite première partie d'extrémité (P1) et ledit premier élément de prolongement d'arbre (E1) définissent ensemble une surface cylindrique continue, sur laquelle une douille cylindrique (B1) est montée par un ajustement serré, de manière à assurer la coaxialité du premier élément de prolongement d'arbre (E1) avec l'arbre primaire (P), ladite douille (B1) supportant en rotation ledit troisième engrenage (R61) par l'intermédiaire d'un roulement, et
- dans l'état couplé de ladite deuxième partie d'extrémité (S1) et dudit deuxième élément de prolongement d'arbre (E2), ledit deuxième engrenage (R52) et ledit quatrième engrenage (R62) ont des moyeux adjacents (H1, H2) qui définissent ensemble une surface cylindrique continue, sur laquelle une douille cylindrique (B2) est montée par ajustement serré, de manière à assurer la coaxialité du deuxième élément de prolongement d'arbre (E2) avec l'arbre secondaire (S).

2. Dispositif de changement de vitesse selon la revendication 1, **caractérisé en ce que** lesdits éléments de prolongement d'arbre (E1, E2) ont chacun une extrémité (101, 201) supportée en rotation par le carter de changement de vitesse (2, 2A) au moyen d'un roulement (C5, C6).

3. Dispositif de changement de vitesse selon la revendication 2, **caractérisé en ce que** chacun desdits éléments de prolongement d'arbre (E1, E2) a une partie cylindrique intermédiaire (102, 202), à partir de laquelle s'étend une tige filetée (103, 203) de diamètre inférieur, qui est vissée dans un trou axial fileté (104, 204) formé dans chacun desdits arbres primaire et secondaire (P, S) à partir de sa surface d'extrémité.
